# EUROPEAN PATENT APPLICATION

(11) **EP 1 825 745 A2**
(43) Date of publication of application: **29.08.2007**
(21) Application number: 06118832.2
(22) Date of filing: 11.08.2006
(51) Int. Cl.: A01G 9/02

(54) **Plant container assembly**

(30) Priority: 27.02.2006 PL 37905806
(71) Applicant: Terra, Boguslaw Albinowski, 66-620 Gubin (PL)
(72) Inventor: Albinowski, Boguslaw, 68-343, Brody (PL)
(74) Representative: Karcz, Katarzyna

(57) **Abstract**

The invention relates to plant container assembly comprising a vertical support pole (1) with centered around it enclosures (6) located one over another. At least one pair of transverse elements is secured to the ends of the support pole (1) perpendicularly to its axis, the at least one pair of transverse elements consisting of mutually parallel upper transverse element (3) and lower transverse element (2), the lower transverse element being longer than the upper transverse element. One end of each upper transverse element is connected to one end of its respective lower transverse element by a mounting lath (4) provided with abutment means (5) spaced lengthwise thereon, the laterally closed enclosures (6) being nested on the abutment means (5) by their lower edges. The enclosures consist at least partially of a truncated cone lateral surface and the area limited by the upper edge of each enclosure (6) is smaller than that limited by the lower edge of the enclosure (6) located directly below. The lowermost enclosure (6) is formed as a pot having its bottom secured to the lower transverse element (2).

## Description

The present invention relates to a plant container assembly used to form vertical plant constructions.

French patent FR 2733117 discloses a cultivation tower consisting of circular plant pots located one over another, containing garden soil. The distance between the successive pots is defined by three vertical tubes crossing the bottom of each pot, the tubes being provided with shoulders supporting the pot located above from outside.

From US 2803923 an indoor portable garden stand is known comprising a wheeled horizontal square base connected to an upstanding post held by oblique supports. Open containers having square base are placed on the post one over another, each successive container being smaller than the one directly preceding. The containers are carried by horizontal bars secured to the post.

From US 5438797 a vertical planter is known, comprising a pole with flower pots with central bore secured thereon, the pots being supported by horizontal bars extending through apertures in the pole. The pole is fixedly secured in the ground or seated in a horizontal stand.

From US 3293798 a planter is known constructed of a vertical standard with perforated pan-shaped sections having a central bore secured thereon, the sections being filled with garden soil. Each section is resting on the soil filling the section located directly below, the uppermost section being secured by a nut which is screwed on the top of the standard.

From the Polish patent application P 344044 a plant containers assembly is known, comprising a supporting pole carrying a plurality of open containers centered thereon and nested one over another. Each subsequent container has smaller dimensions than the precedent one and is carried by a structure consisting of mutually rectangular bars extending through apertures in the supporting pole or of rails secured to a tube fixed to the supporting pole. The lateral walls of the subsequent containers define therebetween a planting space.

The above described solutions have the disadvantage of being limited to the applicability in an open space, the positioning of the known planters against a wall or in building or fence corners being impossible.

To overcome this disadvantage a plant container assembly has been proposed according to the present invention, wherein at least one pair of transverse elements is secured to the ends of the support pole perpendicularly to its axis, the at least one pair of transverse elements consisting of mutually parallel upper transverse element and lower transverse element. The lower transverse element is longer than the upper transverse element. Each upper transverse element is connected to its respective lower transverse element by a mounting lath provided with abutment means spaced lengthwise thereon, the laterally closed enclosures being nested on the abutment means by their lower edges. Each enclosure comprises at least a part of a truncated cone lateral surface. The area limited by the upper edge of each enclosure is smaller than that limited by the lower edge of the enclosure located directly below. The lowermost enclosure is formed as a pot having its bottom secured to the lower transverse element.

In one embodiment of the plant container assembly according to the invention two mutually perpendicular pairs of transverse elements are secured to the ends of the support pole.

In another embodiment of the plant container assembly according to the invention three pairs of transverse elements are secured to the ends of the support pole, two of the pairs lying in a mutual plane and the third one being perpendicular to them.

In yet another embodiment of the plant container assembly according to the invention four pairs of transverse elements are secured to the ends of the support pole, the pairs of transverse elements being angularly spaced form each other by an angle of 90°.

Preferably, in a plant container assembly having at least two pairs of the transverse elements, the upper transverse elements are of the same length, the lower transverse elements are of the same length, and the upper transverse elements are shorter than the lower transverse elements.

Preferably the upper end of the support pole is provided with a grip and the uppermost enclosure is fixed to the support pole.

The plant container assembly according to the invention presents the advantage of being multifunctional which enables its suitable embodiments being used depending on the installation place, for example against a wall or in a corner. The assembly is distinguished by a simple construction, high stability, being at the same time readily and safely transportable by a crane when filled with garden soil and plants.

The assembly according to the invention is described with reference to the appended drawings, wherein fig. 1 presents the plant container assembly according to the invention with four pairs of transverse elements, fig. 2 presents the plant container assembly according to the invention with circular enclosures, fig. 3 presents the plant container assembly according to the invention with three pairs of transverse elements, fig. 4 presents the plant container assembly according to the invention with semi-circular enclosures, fig. 5 presents the plant container assembly according to the invention with two pairs of transverse elements, fig. 6 presents the plant container assembly according to the invention with two pairs of transverse elements and with quarter-circular enclosures, fig. 7 presents the plant container assembly according to the invention with one pair of transverse elements and fig. 8 presents the plant container assembly according to the invention with one pair of transverse elements and with quarter-circular enclosures.

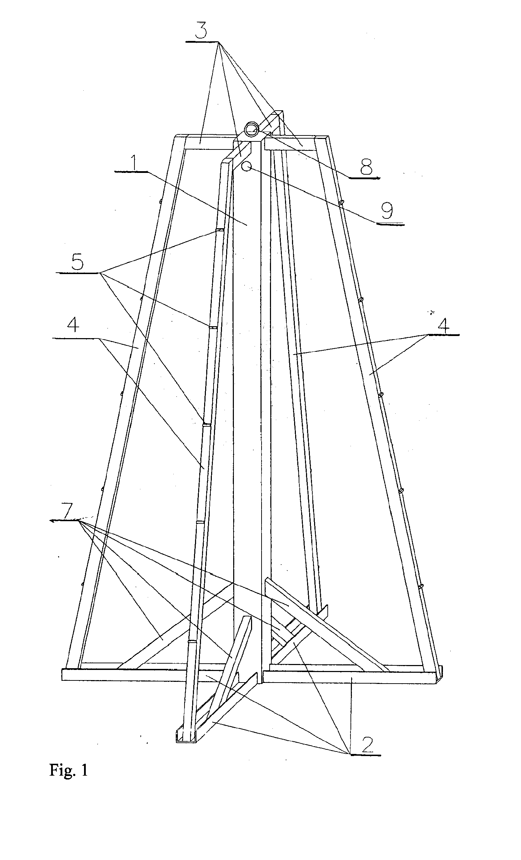

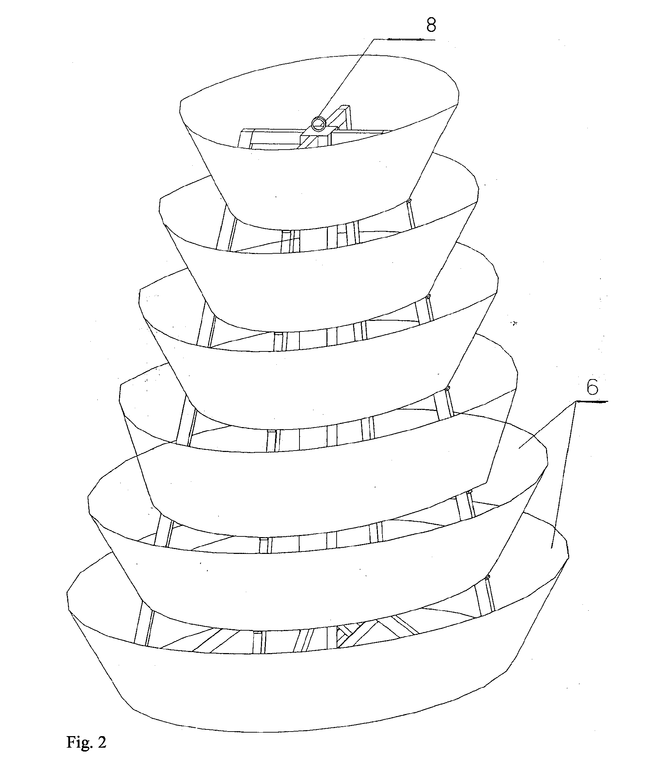

The plant container assembly presented on fig. 1 and 2 comprises a vertical tubular pole 1 of a square cross-section, to the lower end of which four lower transverse elements 2 of the same length are secured, the lower transverse elements 2 being perpendicular to the axis of the pole and angularly spaced from each other on a plane by an angle of 90°. Four upper transverse elements 3 of the same length, which are parallel to the lower transverse elements 2, are secured to the upper end of the pole 1, the length of the upper transverse elements 3 being smaller than that of the lower transverse elements 2. Each upper transverse element 3 is connected with its corresponding lower transverse element 2 by a mounting lath 4 provided with abutment means 5 spaced lengthwise thereon. The abutment means 5 have a form of flat bars welded on the lath. Peripherally closed enclosures 6 having the lateral wall in a shape of an inverted truncated cone are nested on the abutment means 5. The area limited by the upper edge of each enclosure is smaller than the area limited by the lower edge of the enclosure located directly below. The lowermost enclosure 6 is formed as a pot having its bottom secured to the lower transverse elements 2. In order to improve the stability of the assembly, the connection of the lower transverse elements 2 with the pole 1 is reinforced by additional supports 7. The upper end of the pole 1 is provided with a grip 8 and a hole 9 located below it to facilitate the transport of the assembly by means of a crane.

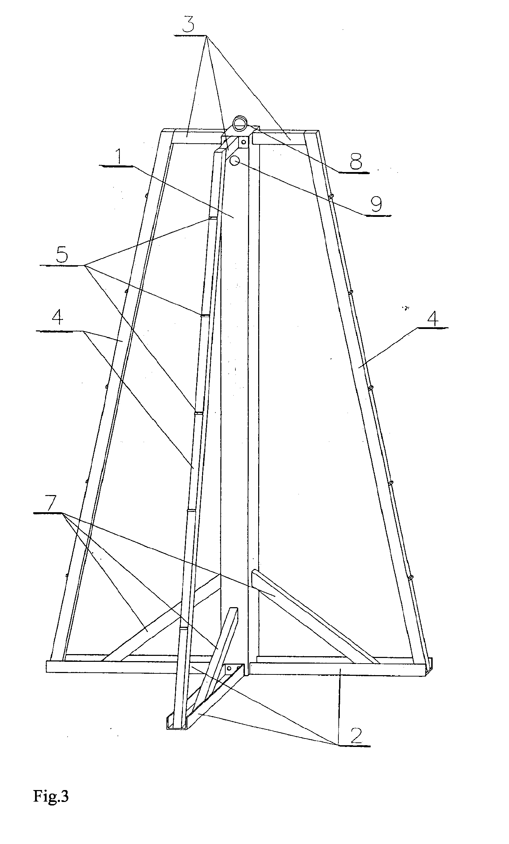

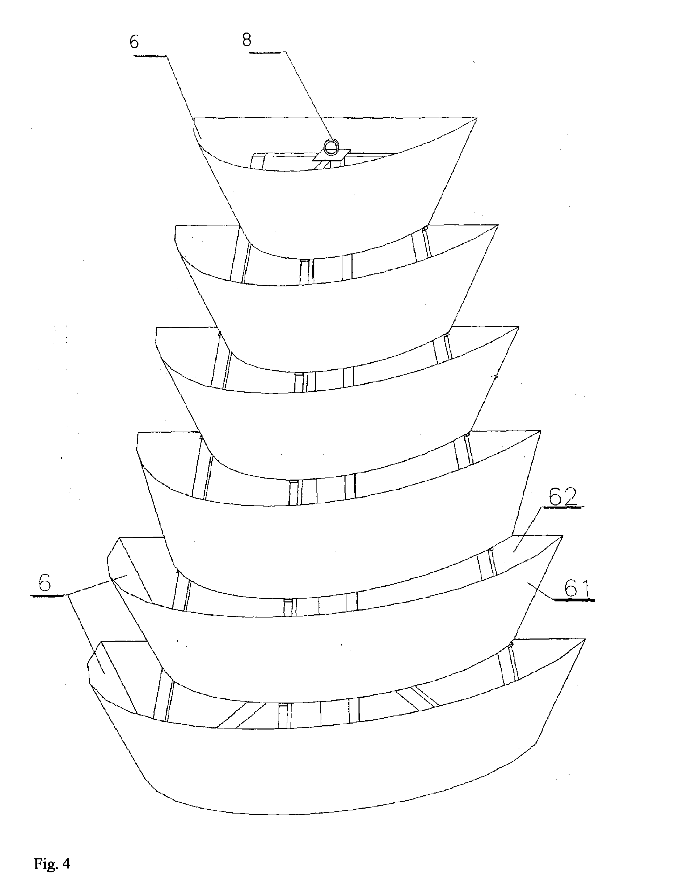

The embodiment of the invention presented on fig. 3 and 4 is constructed of a vertical tubular pole 1 of a square cross-section, to the lower end of which three lower transverse elements 2 of the same length are secured, the lower transverse elements 2 being perpendicular to the axis of the pole, two of them lying on the same axis and the third one being perpendicular thereto. Three upper transverse elements 3 of the same length, which are parallel to the lower transverse elements 2, are secured to the upper end of the pole 1, the length of the upper transverse elements 3 being smaller than that of the lower transverse elements 2. Each upper transverse element 3 is connected with its corresponding lower transverse element 2 by a mounting lath 4 provided with abutment means 5 spaced lengthwise thereon. The abutment means 5 have a form of flat bars welded on the lath. Peripherally closed enclosures 6 are nested on the abutment means 5, the shape of the enclosures 6 being a combination of a semi-circular sector 61 of the lateral wall of an inverted truncated cone with a plate 62 of trapezoidal shape. The area limited by the upper edge of each enclosure is smaller than the area limited by the lower edge of the enclosure located directly below. The lowermost enclosure 6 is formed as a pot having its bottom secured to the lower transverse elements 2. In order to improve the stability of the assembly, the connection of the lower transverse elements 2 with the pole 1 is reinforced by additional supports 7. The upper end of the pole 1 is provided with a grip 8 and a hole 9 located below it to facilitate the transport of the assembly by means of a crane. In order to make dismantling of the assembly by unauthorized persons impossible, the plate 62 of the uppermost enclosure 6 is secured to the pole 1.

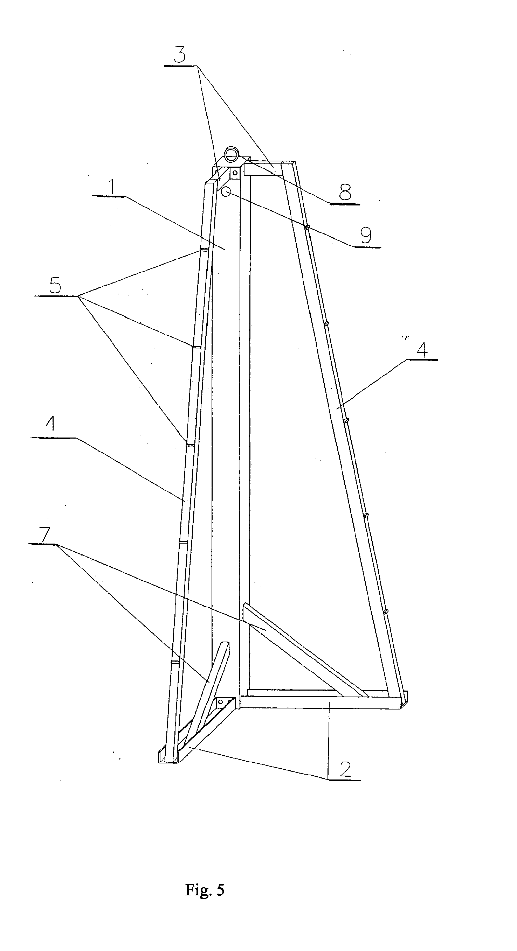

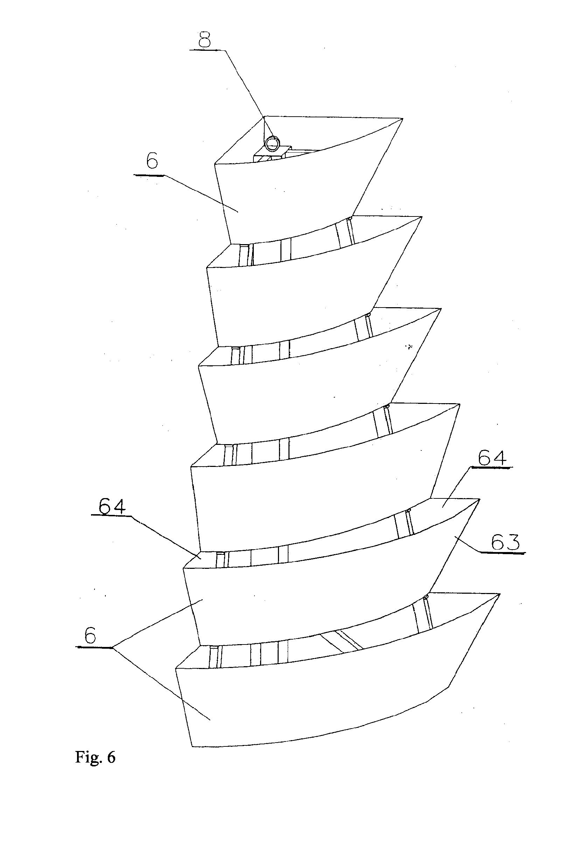

The embodiment of the plant container assembly of the invention presented on fig. 5 and 6 is constructed of a vertical tubular pole 1 of a square cross-section, to the lower end of which two lower transverse elements 2 of the same length are secured, the lower transverse elements 2 being perpendicular to the axis of the pole and angularly spaced from each other by a right angle.

Two upper transverse elements 3 of the same length, which are parallel to the lower transverse elements 2, are secured to the upper end of the pole 1, the length of the upper transverse elements 3 being smaller than that of the lower transverse elements 2. Each upper transverse element 3 is connected with its corresponding lower transverse element 2 by a mounting lath 4 provided with abutment means 5 spaced lengthwise thereon. The abutment means 5 have a form of flat bars welded on the lath. Peripherally closed enclosures 6 are nested on the abutment means 5, the shape of the enclosures 6 being a combination of a quarter-circular sector 63 of the lateral wall of an inverted truncated cone with two mutually perpendicular plates 64 of trapezoidal shape. The area limited by the upper edge of each enclosure is smaller than the area limited by the lower edge of the enclosure located directly below. The lowermost enclosure 6 is formed as a pot having its bottom secured to the lower transverse elements 2. In order to improve the stability of the assembly, the connection of the lower transverse elements 2 with the pole 1 is reinforced by additional supports 7. The upper end of the pole 1 is provided with a grip 8 and a hole 9 located below it to facilitate the transport of the assembly by means of a crane. In order to make dismantling of the assembly by unauthorized persons impossible, the plate 64 of the uppermost enclosure 6 is secured to the pole 1.

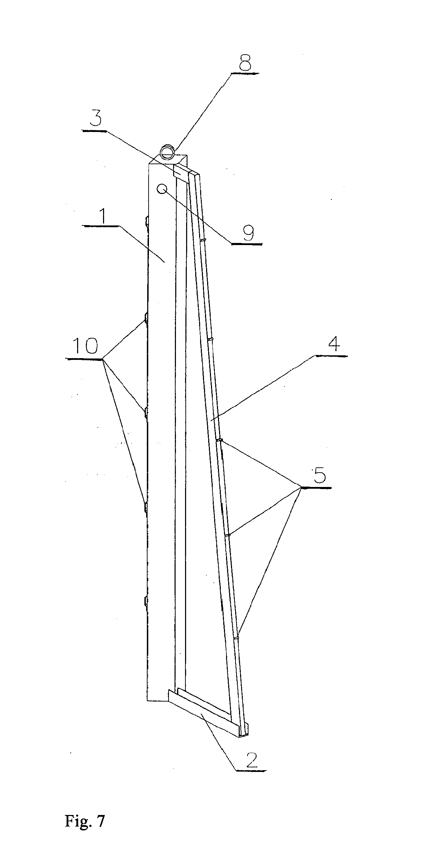

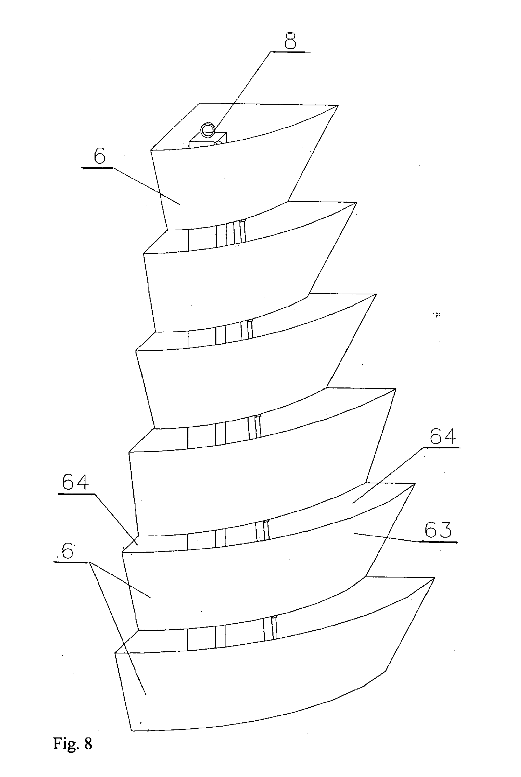

The embodiment of the plant container assembly of the invention presented on fig. 7 and 8 is constructed of a vertical tubular pole 1 of a square cross-section, to the lower end of which one lower transverse element 2 is secured, which is perpendicular to the axis of the pole 1. One upper transverse element 3 parallel to the lower transverse element 2, is secured to the upper end of the pole 1, the length of the upper transverse element 3 being smaller than that of the lower transverse element 2. The ends of both transverse elements 2 and 3 are connected by a mounting lath 4 provided with abutment means 5 spaced lengthwise thereon. The abutment means 5 have a form of flat bars welded on the lath. Peripherally closed enclosures 6 are nested on the abutment means 5, the shape of the enclosures 6 being a combination of a quarter-circular sector 63 of the lateral wall of an inverted truncated cone with two mutually perpendicular plates 64 of trapezoidal shape. Angle bars 10 supporting the plates 64 of the enclosures 6 are fixed to the pole 10 longitudinally on the levels corresponding to the location of the abutment means 5. The area limited by the upper edge of each enclosure is smaller than the area limited by the lower edge of the enclosure located directly below. The lowermost enclosure 6 is formed as a pot having its bottom secured to the lower transverse element 2. The upper end of the pole 1 is provided with a grip 8 and a hole 9 located below it to facilitate the transport of the assembly by means of a crane. In order to make dismantling of the assembly by unauthorized persons impossible, the plate 64 of the uppermost enclosure 6 is secured to the pole 1.

The plant container assembly of the invention when filled with garden soil and flowers or other plants becomes a decorative soil construction of a shape defined by the chosen embodiment, with the supporting elements covered by the plants.

## Claims

1. A plant container assembly comprising a vertical support pole with centered around it enclosures located one over another, **characterized in that** at least one pair of transverse elements is secured to the ends of the support pole (1) perpendicularly to its axis, the at least one pair of transverse elements consisting of mutually parallel upper transverse element (3) and lower transverse element (2), the lower transverse element being longer than the upper transverse element, one end of each upper transverse element being connected to one end of its respective lower transverse element by a mounting lath (4) provided with abutment means (5) spaced lengthwise thereon, the laterally closed enclosures (6) being nested on the abutment means (5) by their lower edges, each enclosure consisting at least partially of a truncated cone lateral surface and the area limited by the upper edge of each enclosure (6) being smaller than that limited by the lower edge of the enclosure (6) located directly below, the lowermost enclosure (6) being formed as a pot having its bottom secured to the lower transverse element (2).

2. The assembly of claim 1, wherein the lower transverse elements (2) have the same length, the upper transverse elements (3) have the same length, and the upper transverse elements are shorter than the lower transverse elements.

3. The assembly of claim 1, wherein two mutually perpendicular pairs of transverse elements (2, 3) are secured to the ends of the support pole (1) .

4. The assembly of claim 1, wherein three pairs of transverse elements (2, 3) are secured to the ends of the support pole (1), two of the pairs lying in a mutual plane and the third one being perpendicular to them.

5. The assembly of claim 1, wherein four pairs of transverse elements (2, 3) are secured to the ends of the support pole (1), the pairs of transverse elements being angularly spaced from each other by an angle of 90°.

6. The assembly of claim 1, wherein the upper end of the support pole (1) is provided with a grip (8) and/or a hole (9) located below it.

7. The assembly of claim 1, wherein the uppermost enclosure (6) is fixed to the support pole.
